# EUROPÄISCHE PATENTSCHRIFT

(11) **EP 1 707 809 B1**
(45) Veröffentlichungstag und Bekanntmachung des Hinweises auf die Patenterteilung: **11.07.2007**
(21) Anmeldenummer: 05006506.9
(22) Anmeldetag: 24.03.2005
(51) Int. Cl.: F03G 3/00

(54) **Rotierender Trägheitsantrieb**
Rotational inertial motor
Moteur rotatif à inertie

(43) Veröffentlichungstag der Anmeldung: 04.10.2006
(73) Patentinhaber: Lasch, Thorsten, Dr.-Ing., 99880 Aspach (DE); Lasch, Steffi, 99880 Aspach (DE)
(72) Erfinder: Lasch, Thorsten, 99880 Aspach (DE)
(74) Vertreter: Schober, Mirko

(56) Entgegenhaltungen:
- DE-A1- 10 151 527
- US-A- 5 937 698
- US-A- 6 109 123
- US-A1- 2003 047 015

## Beschreibung

Die Erfindung betrifft einen Antrieb zum Erzeugen einer gerichteten Bewegung und ein entsprechendes Verfahren hierzu.

Bisherige Antriebe, insbesondere von Fahrzeugen, werden dadurch realisiert, daß das Abstoßen der Fahrzeuge von einem Medium ausgenutzt wird, um den Vortrieb zu erzeugen. Landfahrzeuge werden z. B. durch Abstoßen von der Fahrbahn angetrieben, Wasserfahrzeuge (sofern motorisiert) erfahren ihren Vortrieb durch Zusammenwirken mit dem Wasser. Darüber hinaus existieren Antriebe, die Drehimpulse in eine gerichtete Bewegung umsetzen und somit den Vortrieb erzeugen.

In DE 101 51 527 A1 ist z. B. eine Vorrichtung zur Wandlung und Speicherung von Energie beschrieben. Hierzu wird eine mit Hilfsmassen versehene Schwungmasse in Rotation versetzt. Die Hilfsmassen müssen tangential beschleunigt werden, um eine Änderung der Rotationsgeschwindigkeit und damit einen Antrieb des Systems zu erzeugen.

In US 2003/0047015 A1, die als nächstkommender Stand der Technik angesehen wird, werden mehrere axial verschiebliche Schwungmassen durch einen Motor angetrieben.

Der Vortrieb des dortigen Systems erfolgt durch Ausnutzung ausschließlich zentrifugaler Kräfte. Diese bekannten Antriebe sind jedoch verhältnismäßig kompliziert aufgebaut und erfordern mehrere Schwung- bzw. Hilfsmassen.

Aufgabe der vorliegenden Erfindung ist es, einen einfachen Mechanismus zur Erzeugung einer gerichteten Bewegung anzugeben, der einfach aufgebaut ist und bei dem insbesondere lediglich eine Schwungmasse erforderlich ist.

Gelöst wird diese Aufgabe durch die Merkmale des Anspruchs 1 bzw. durch ein Verfahren nach Anspruch 9. Vorteilhafte Ausführungsformen finden sich in den Unteransprüchen.

Erfindungsgemäß wird eine Kraft in der Vorzugsrichtung, d. h. in der Richtung, in welche das angetriebene System bewegt werden soll, außerhalb des Schwerpunktes der Schwungmasse ausgeübt. Hierdurch führt die Schwungmasse eine Translationsbewegung entgegen der Vorzugsrichtung und eine Rotationsbewegung aus. Während der Rotationsbewegung der Schwungmasse greift eine zweite Kraft am Schwerpunkt der Schwungmasse an, so daß diese Kraft nur eine Translationsbewegung der Schwungmasse bewirkt und daher dem Betrage nach kleiner als die erste Kraft ist. Hierdurch wirkt auf das zu bewegende System (z. B. Fahrzeug) infolge des Prinzips "*actio* = *reactio*" aufgrund der sich nicht vollständig aufhebenden ersten und zweiten Kräfte eine Kraft, die zur gerichteten Bewegung des Systems in Vorzugsrichtung führt.

Die Erfindung wird nachfolgend anhand eines Ausführungsbeispiels in den Figuren 1 bis 3 schematisch näher erläutert, wobei in den Figuren lediglich eine mögliche Ausführungsform des erfindungsgemäßen Prinzips gezeigt ist.
- Figur 1 -: zeigt ein Beispiel für einen erfindungsgemäßen Antrieb in einer ersten Betriebsstellung.
- Figur 2 -: zeigt das Beispiel von Figur 1 in einer zweiten Betriebsstellung.
- Figur 3 -: zeigt das Beispiel von Figur 1 in einer dritten Betriebsstellung.

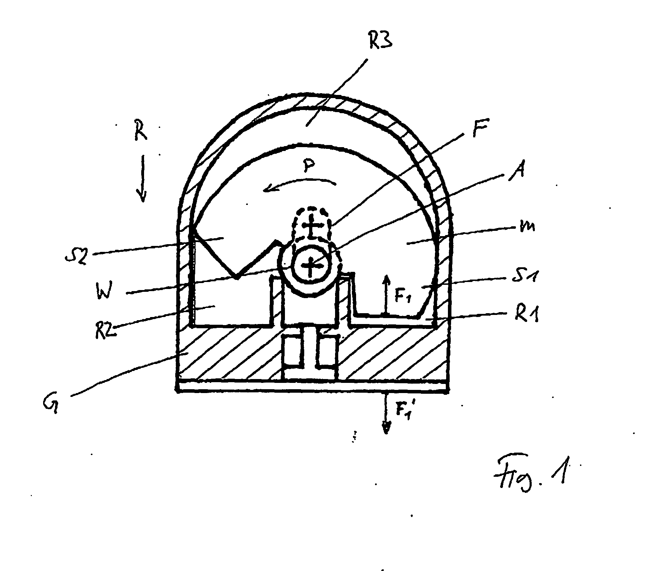

In der Figur 1 ist beispielhaft ein Antrieb gezeigt, der das erfindungsgemäße Prinzip umsetzt. Der Antrieb wird an dem zu bewegenden System (Fahrzeug oder dergleichen) angebracht. Im gezeigten Beispiel ist ein Gehäuse G vorgesehen, in welchem eine etwa halbmondförmige Schwungmasse m untergebracht ist, wobei auch andere Formen für die Schwungmasse m denkbar sind. Das Gehäuse G ist vorteilhafterweise an die Form der Schwungmasse m angepaßt. Die Schwungmasse m ist um eine Achse A drehbar gelagert, wobei die Achse A vorteilhafterweise durch eine im Gehäuse G gelagerte Welle W gebildet wird. Die Schwungmasse m weist neben dem so erzielten Rotationsfreiheitsgrad auch noch einen Freiheitsgrad für die Translation auf. Dieser translatorische Freiheitsgrad besteht hinsichtlich der Vorzugsrichtung R, d. h. der Richtung, in der das System mittels des Antriebs bewegt werden soll. Hierzu wird die Achse A bzw. die Welle W vorteilhafterweise in einer sich in Vorzugsrichtung R erstreckenden Führung F im Gehäuse G geführt. Natürlich kann die translatorische Führung der Schwungmasse m auch auf andere Weise erfolgen.

Der in der Zeichnung rechte Schenkel S1 der Schwungmasse m befindet sich in Figur 1 in einem im Gehäuse G befindlichen Raum R1. Durch Ausüben einer Kraft F1 über ein erstes Antriebsmittel auf den in der Zeichnung rechten Schenkel S1 und damit außerhalb des Schwerpunkts der Schwungmasse m wird die Schwungmasse m in Richtung des Pfeils P um die Achse A gedreht.

Als Antriebsmittel ist bevorzugt die Expansion eines Fluids (d. h. eines gasförmigen oder flüssigen Mediums) vorgesehen, jedoch sind andere Antriebsmittel denkbar, die geeignet sind, die Schwungmasse m in der erfindungsgemäßen Weise in Bewegung zu setzen, beispielsweise ein elektromagnetischer Antrieb oder dergleichen.

Gleichzeitig mit der Drehbewegung der Schwungmasse m wird die Schwungmasse m entgegen der Vorzugsrichtung R translatorisch bewegt, wobei sich die Drehachse A entsprechend verlagert. Im gezeigten Beispiel wird die Verlagerung durch Führen der Welle W in der Führung F realisiert. Durch Ausüben der Kraft F1 in der geschilderten Weise wirkt gleichzeitig auf das mit dem Antrieb verbundene System eine Gegenkraft F1' gleichen Betrages und sorgt für den Vortrieb des Systems in Vorzugsrichtung R.

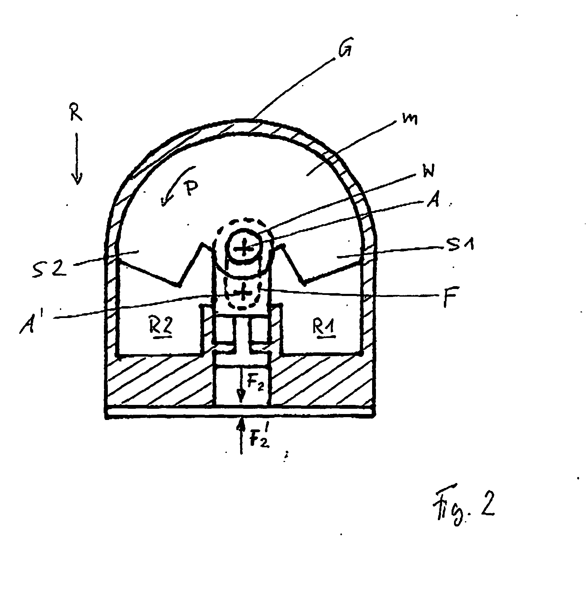

Durch die Trägheit der Schwungmasse m wird diese in Richtung des Pfeils P bewegt, so daß der linke Schenkel S2 der Schwungmasse m sich in Richtung des linken Raumes R2 bewegt. Gleichzeitig bewegt sich die Schwungmasse m gegen die Vorzugsrichtung R so, daß sie etwa auf der Hälfte ihrer Bewegung den Raum R3 ausfüllt. Diese Situation ist in Figur 2 dargestellt. Hier ist die Schwungmasse m im Bezug auf die Richtung der Kraft F1 translatorisch bewegt worden, wobei die Drehachse bzw. die Welle W der Schwungmasse m von der Position A' zur Position A gewandert ist.

An diesem Punkt, an dem die Schwungmasse m sich infolge ihrer Trägheit weiter in Pfeilrichtung P bewegt, wird nun durch ein zweites Antriebsmittel (das wie das erste Antriebsmittel als expandierendes Fluid oder beispielsweise durch einen elektromagnetischen Antrieb realisiert sein kann) eine Kraft F2 auf die Schwungmasse m ausgeübt, und zwar so, daß diese im Schwerpunkt angreift, so daß sie kein Drehmoment auf die Schwungmasse m, sondern nur eine translatorische Bewegung der Schwungmasse m entgegen der Vorzugsrichtung R bewirkt. Diese Kraft F2 holt die Schwungmasse m folglich "zurück", wobei sie sich weiterhin dreht.

Da die Kraft F2 so angreift, daß kein Drehmoment auf die Schwungmasse ausgeübt wird, gilt für die Beträge der Kräfte F2 < F1. Somit ist die durch die Kraft F2 verursachte Gegenkraft F2' auf das System kleiner als jene Gegenkraft F1', die durch F1 hervorgerufen wurde. In der Addition der Kräfte F1 und F2 bzw. F1' und F2' bleibt eine Komponente in Vorzugsrichtung R übrig, die für den Vortrieb des Systems sorgt.

Dieser Vorgang wird erfindungsgemäß wiederholt, so daß ein permanenter Antrieb des Systems in Vorzugsrichtung R erfolgt. Im gezeigten Beispiel übt die Schwungmasse m eine Pendelbewegung aus, bei der sie zwischen den Räumen R1 und R2 hin- und herpendelt.

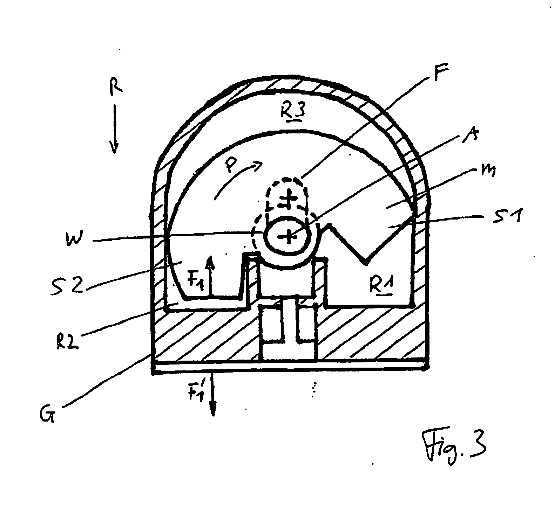

Dies wird im gezeigten Beispiel dadurch realisiert, daß dann, wenn der zweite Schenkel S2 der Schwungmasse m infolge ihrer Trägheit in den Raum R2 gelangt, wiederum die Kraft F1 auf die Schwungmasse m ausgeübt wird, sie diesmal jedoch am zweiten Schenkel S2 angreift, so daß sich die Schwungmasse m in Richtung des Pfeils P bewegt. Dies ist in Figur 3 gezeigt. Wieder erfolgt dann ein translatorisches "Zurückholen" der Schwungmasse m durch Ausüben der Kraft F2 wie im Zusammenhang mit Figur 2 beschrieben. Dieser Vorgang des wechselseitigen Ausübens der Kraft F1 einmal auf den linken Schenkel S2 und den rechten Schenkel S1 der Schwungmasse m und ein zwischendurch erfolgendes Ausüben der zu F1 entgegengesetzten Kraft F2 im Schwerpunkt der Schwungmasse m sorgt schließlich für den kontinuierlichen Antrieb des Systems und dessen Bewegung in Vorzugsrichtung R.

Um das Massenträgheitsmoment einer Schwungmasse m zu verändern, kann die Schwungmasse m - vorzugsweise außerhalb des Gehäuses G - noch mit zusätzlichen Hilfsmassen bestückt werden.

Um die "Laufruhe" zu erhöhen bzw. den durch die Rotation der Schwungmasse m hervorgerufenen Drehimpuls auf das System zu verringern, sollte ein angetriebenes System vorteilhafterweise mehrere erfindungsgemäße Antriebe aufweisen. Diese Antriebe werden dann so geschaltet, daß die Rotationsbewegungen der einzelnen Schwungmassen m gegenläufig erfolgen.

## Patentansprüche

1. Antrieb zum Erzeugen einer gerichteten Bewegung in eine Vorzugsrichtung (R) mit einer in einem Gehäuse (G) aufgenommenen Schwungmasse (m), welche in Vorzugsrichtung beweglich ist, wobei ein erstes Antriebsmittel vorgesehen ist, das so ausgelegt ist, daß es auf die Schwungmasse (m) außerhalb von deren Schwerpunkt eine erste Kraft (F1) mit wenigstens einer Komponente parallel zur Vorzugsrichtung (R) ausübt, wobei ein zweites Antriebsmittel vorgesehen ist, welches eine der ersten Kraft (F1) entgegengerichtete zweite Kraft (F2) auf die Schwungmasse (m) ausübt, welche in deren Schwerpunkt angreift,
**dadurch gekennzeichnet,**
**daß** die Schwungmasse (m) um eine ebenfalls in bzw. entgegen der Vorzugsrichtung innerhalb des Gehäuses (G) verlagerbare Achse (A) drehbar gelagert ist.

2. Antrieb nach Anspruch 1,
**dadurch gekennzeichnet,**
**daß** es sich bei der Schwungmasse (m) um einen etwa halbmondförmigen Körper handelt, der mittig an einer Welle (W) drehbar gelagert ist.

3. Antrieb nach Anspruch 2,
**dadurch gekennzeichnet,**
**daß** im Gehäuse (G) eine sich in Vorzugsrichtung (R) erstreckende Führung (F) zur Aufnahme der Welle (W) vorgesehen ist.

4. Antrieb nach Anspruch 2 oder 3,
**dadurch gekennzeichnet,**
**daß** an der Welle (W) neben der Schwungmasse (m) ggf. außerhalb des Gehäuses (G) wenigstens eine weitere Hilfsmasse vorgesehen ist.

5. Antrieb nach einem der vorherigen Ansprüche,
**dadurch gekennzeichnet,**
**daß** das erste und/oder zweite Antriebsmittel ein expandierendes Gas ist.

6. Antrieb nach einem der Ansprüche 1 bis 5,
**dadurch gekennzeichnet,**
**daß** das erste oder zweite Antriebsmittel ein elektromagnetischer Antrieb ist.

7. Antriebssystem, das wenigstens zwei Antriebe nach einem der vorherigen Ansprüche umfaßt.

8. Verfahren zum Erzeugen einer gerichteten Bewegung eines Körpers, insbesondere eines Fahrzeugs, in einer Vorzugsrichtung (R) mittels wenigstens eines Antriebs, insbesondere nach einem der Ansprüche 1 bis 6,
**gekennzeichnet durch**
abwechselndes Ausführen der folgenden Schritte:
- Ausüben einer ersten Kraft (F1) auf wenigstens eine parallel zur Vorzugsrichtung (R) translatorisch und außerdem um eine Achse (A) drehbar gelagerte Schwungmasse (m) außerhalb ihres Schwerpunktes, so daß die Schwungmasse (m) eine Translations- und eine Rotationsbewegung ausführt, wobei die Schwungmasse (m) innerhalb eines Gehäuses (G) des Antriebs aufgenommen und die Achse (A) in bzw. entgegen der Vorzugsrichtung innerhalb des Gehäuses (G) verlagerbar ist,
- Ausüben einer der ersten Kraft (F1) entgegengerichteten zweiten Kraft (F2) auf die Schwungmasse (m) in deren Schwerpunkt, so daß die Schwungmasse (m) eine Translationsbewegung ausführt.

9. Verfahren nach Anspruch 8,
**dadurch gekennzeichnet,**
**daß** wenigstens zwei Antriebe nach einem der Ansprüche 1 bis 6 verwendet werden, wobei die Kraftausübung so erfolgt, daß die Rotationsbewegungen der jeweiligen Schwungmassen (m) gegenläufig erfolgen.

## Claims

1. Drive for generating a directional movement in a preferred direction (R) with a flywheel mass (m) which is contained in a housing (G) and which is movable in the preferred direction wherein a first drive means is provided which is designed so that it exerts on the flywheel mass (m) outside of its centre of gravity a first force (F1) with at least one component parallel to the preferred direction (R) wherein a second drive means is provided which exerts on the flywheel mass (m) a second force (F2) which is opposite the first force (F1) and which engages in the centre of gravity of the flywheel mass,
**characterised in that**
the flywheel mass (m) is mounted rotatable about an axis (A) which can be displaced in and against the preferred direction inside the housing (G).

2. Drive according to claim 1,
**characterised in that**
the flywheel mass (m) is a roughly half-moon shaped body which is mounted rotatable centrally on a shaft (W).

3. Drive according to claim 2,
**characterised in that**
a guide (F) is provided in the housing (G) to extend in the preferred direction (R) and hold the shaft (W).

4. Drive according to claim 2 or 3,
**characterised in that**
at least a further secondary mass is provided on the shaft (W) next to the flywheel mass (m) where applicable outside of the housing (G).

5. Drive according to one of the previous claims,
**characterised in that**
the first and/or second drive means is an expanding gas.

6. Drive according to one of claims 1 to 5,
**characterised in that**
the first or second drive means is an electromagnetic drive.

7. Drive system which comprises at least two drives according to one of the previous claims.

8. Method for generating a directional movement of a body, more particularly a vehicle, in a preferred direction (R) by means of at least one drive, more particularly according to one of claims 1 to 6,
**characterised by**
alternately executing the following steps:
- exerting a first force (F1) on at least a flywheel mass (m) which is mounted for translation movement parallel to the preferred direction (R) and furthermore rotatable about an axis (A) outside of its centre of gravity so that the flywheel mass (m) executes a translation and rotational movement wherein the flywheel mass (m) is set inside a housing (G) of the drive and the axis (A) is displaceable inside the housing (G) in and against the preferred direction
- exerting a second force (F2) directed against the first force (F1) on the flywheel mass (m) in the centre of gravity thereof so that the flywheel mass (m) executes a translation movement.

9. Method according to claim 8,
**characterised in that**
at least two drives according to one of claims 1 to 6 are used wherein the force is exerted in such a way that the rotational movements of the relevant flywheel masses (m) take place in opposite senses.

## Revendications

1. Moteur rotatif à inertie pour la génération d'un mouvement dirigé dans une direction préférentielle (R), avec une masse inertielle (m) qui, logée dans un carter, est mobile dans la direction préférentielle, un premier moyen d'entraînement étant prévu, lequel est dimensionné de sorte qu'il exerce sur la masse inertielle (m), en dehors du centre de gravité de celle-ci, une première force (F1), avec au moins une composante, parallèlement à la direction préférentielle (R), un deuxième moyen d'entraînement étant prévu, lequel exerce, sur la masse inertielle (m), une deuxième force (F2) qui attaque le centre de gravité de celle-ci,
**caractérisé en ce que**
la masse inertielle (m) est montée en rotation autour d'un axe (A) qui peut être'aussi décalé dans le carter (G) dans, respectivement à l'opposé de la direction préférentielle.

2. Moteur selon la revendication 1,
**caractérisé en ce que** la masse inertielle (m) est un corps sensiblement en forme de demi-lune qui est monté en rotation au milieu d'un arbre (W).

3. Moteur selon la revendication 1,
**caractérisé en ce que**,
que, dans le carter (G), un guidage (F) s'étendant dans la direction préférentielle (R) est prévu pour recevoir l'arbre (W).

4. Moteur selon la revendication 1,
**caractérisé en ce que**,
sur l'arbre (W), à côté de la masse inertielle (m), le cas échéant en dehors du carter (G), est prévue au moins une autre masse auxiliaire.

5. Moteur selon la revendication 1,
**caractérisé en ce que**
le premier et / ou le deuxième moyen d'entraînement est un gaz en expansion.

6. Moteur selon la revendication 1,
**caractérisé en ce que**
le premier ou le deuxième moyen d'entraînement est un entraînement électromagnétique.

7. Système d'entraînement comprenant au moins deux moteurs selon l'une des revendications précédentes.

8. Procédé pour la génération d'un mouvement dirigé d'un corps, en particulier d'un véhicule automobile, dans une direction préférentielle (R) au moyen d'au moins un moteur, notamment selon l'une des revendications 1 à 6,
**caractérisé par**
l'exécution alternée des étapes suivantes :
- Application d'une première force (F1) sur au moins une masse inertielle (m), montée parallèlement à la direction préférentielle (R) en translation et, en outre, en rotation autour d'un axe (A), en dehors de son centre de gravité, de sorte que la masse inertielle (m) exécute un mouvement de translation et de rotation, ladite masse inertielle (m) étant logée à l'intérieur d'un carter (G) du moteur, et l'axe (A) pouvant être déplacé, à l'intérieur du carter (G), dans, respectivement à l'opposé de la direction préférentielle,
- Application, sur la masse inertielle (m), dans le centre de gravité de celle-ci, d'une deuxième force (F2) orientée à l'opposé de la première force (F1), de sorte que la masse inertielle (m) exécute un mouvement de translation.

9. Procédé selon la revendication 8,
**caractérisé en ce que**
sont utilisés au moins deux moteurs selon l'une des revendications 1 à 6, l'application de la force étant effectuée de sorte que les mouvements de rotation des masses inertielles (m) respectives s'effectuent contrairement.
